# FASCICULE DE BREVET EUROPEEN

(11) **EP 2 906 317 B1**
(45) Date de publication et mention de la délivrance du brevet: **18.07.2018**
(21) Numéro de dépôt: 13812103.3
(22) Date de dépôt: 10.10.2013
(51) Int. Cl.: B01D 21/24

(54) **APPAREIL POUR LA CLARIFICATION D'UN EFFLUENT CONTENANT DES BOUES**
VORRICHTUNG ZUR KLÄRUNG EINES SCHLAMMHALTIGEN ABWASSERS
APPARATUS FOR CLARIFYING A SLUDGE-CONTAINING EFFLUENT

(30) Priorité: 11.10.2012 FR 1259695
(43) Date de publication de la demande: 19.08.2015
(73) Titulaire: SUEZ Groupe, 92040 Paris la Défense Cedex (FR)
(72) Inventeur: CARRAND, Gilles, F-78500 Sartrouville (FR); LANGLAIS, Chrystelle, F-78230 Le Pecq (FR)
(74) Mandataire: Cabinet Armengaud Aîné
(86) Numéro de dépôt international: PCT/IB2013/059265
(87) Numéro de publication internationale: WO 2014/057452

(56) Documents cités:
- WO-A1-00/38975
- DE-A1- 4 100 309
- US-A- 3 333 704

## Description

L'invention est relative à un appareil pour la clarification d'un effluent contenant des boues, appareil du genre de ceux qui comportent :
- un bassin de clarification par décantation des boues qui se déposent en fond de bassin, tandis que l'eau clarifiée est évacuée au niveau supérieur du bassin ;
- au moins un bras mobile au-dessus du niveau supérieur du liquide du bassin pour balayer toute la surface du liquide ;
- au moins une goulotte supportée par le bras, de manière à être immergée suivant une partie de sa hauteur dans le liquide du bassin ;
- des tubes de succion maintenus relativement à la goulotte, plongeant vers le fond du bassin, chaque tube de succion comportant en partie haute une manchette réglable verticalement débouchant dans la goulotte, à un niveau inférieur à celui du niveau de liquide dans le bassin, les tubes plongeurs permettant de délivrer dans la goulotte du liquide et des boues provenant du fond du bassin,
- et un moyen d'évacuation des boues de la goulotte.

Le document US 3 333 704 A décrit un appareil pour la clarification d'un effluent contenant des boues. Cet appareil comprend un bassin de clarification par décantation, des goulottes immergées suivant une partie de leur hauteur dans le liquide du bassin, et des tubes de succion plongeant vers le fond du bassin, chaque tube de succion étant relié directement à une goulotte.

L'invention concerne plus particulièrement, mais non exclusivement, un appareil pour la clarification d'un effluent provenant du traitement et de l'épuration d'eaux usées dans lequel les boues sont formées principalement par de la biomasse épuratrice.

Les appareils pour la clarification d'un effluent, ou clarificateurs, sont des ouvrages qui permettent :
- la clarification des effluents,
- la séparation de la biomasse épuratrice et des particules de l'effluent traité les plus denses, par décantation gravitaire,
- l'épaississement, c'est-à-dire la densification, de ces boues,
- la collecte et la rétention des boues qui doivent être extraites :
   - et recirculées en amont dans la filière de traitement,
   - et/ou évacuées vers la filière de traitement et/ou d'évacuation des boues.

La collecte et l'extraction des boues en fond d'ouvrage dans un temps limité est un enjeu majeur tant économique que technique des clarificateurs.

En effet, si l'extraction des boues est insuffisante et/ou inégalement efficace sur l'ensemble de la surface de l'ouvrage, il se produit des accumulations de ces boues en fond d'ouvrage ; des fractions de ces boues se trouvent privées d'oxygène (condition d'anoxie prolongée), ce qui engendre leur dégradation physico-mécanique et biologique et, consécutivement, des perturbations majeures de l'ensemble de la filière de traitement, telles que :
- la dégradation de la qualité de l'eau traitée : augmentation des teneurs en matières en suspension et en phosphore,
- la dégradation de l'aptitude à la décantation des boues et donc la capacité de traitement, c'est-à-dire l"efficacité technico-économique du clarificateur,
- la dégradation de la qualité épuratrice des boues et donc l'efficacité de traitement de l'ensemble de la filière épuratrice,
- la dégradation de l'aptitude des boues à être traitées,
tout ceci avec un impact économique sur le coût du traitement.

En outre, l'accumulation de boues en fond d'ouvrage induit de fortes contraintes mécaniques sur les équipements de reprise des boues et des problèmes de fiabilité sous-jacents sur ces équipements, ce qui :
- réduit la disponibilité des ouvrages,
- et augmente les coûts de maintenance (main d'oeuvre) et les coûts de renouvellement des équipements.

A contrario, parce que le débit d'extraction des boues :
- est recirculé sur la filière de traitement, dont le clarificateur lui-même, il doit être minimisé afin de limiter :
   - la charge massique surfacique du clarificateur (kg matières sèches/m².h),
   - les coûts d'investissement (taille des pompes d'extraction et de recirculation) et d'exploitation du dispositif d'extraction des boues,
- et/ou est évacué vers l'atelier de traitement des boues, il doit être minimisé afin d'optimiser le dimensionnement et le fonctionnement technico-économique de la filière boue.

L'efficacité, la robustesse et la fiabilité du dispositif de reprise des boues en fond d'ouvrage sont donc des enjeux majeurs pour une extraction des boues
- nécessaire pour limiter le temps de séjour des boues dans l'ouvrage,
- et suffisante pour ne pas augmenter les charges hydrauliques et massiques des ouvrages et des équipements de traitement de la filière eau et/ou d'évacuation et de traitement des boues.

Les appareils pour la clarification visés par l'invention, ou clarificateurs dits "sucés", sont bien adaptés aux grands ouvrages de clarification, c'est-à-dire à des ouvrages dont les bassins, en principe circulaires, ont un diamètre généralement supérieur à 25 m. Les tubes de succion plongent directement dans le lit de boues décantées en fond d'ouvrage et balayent l'ensemble de la surface de fond. Ces tubes débouchent dans la goulotte de reprise des boues en surface, dont le niveau hydraulique est maintenu inférieur à celui du clarificateur.

Pour permettre de régler individuellement le débit de succion de chacun des tubes, chaque tube est muni d'une manchette télescopique à niveau de déversement fixé mais réglable. Cette manchette est installée au débouché de chaque tube de succion, et le déversement du liquide et des boues s'effectue au-dessus de l'extrémité supérieure de la manchette télescopique. Cette différence entre le niveau liquide dans le clarificateur et le niveau liquide au débouché supérieur des tubes télescopiques de déversement des boues dans la goulotte est utilisée comme force motrice pour la succion et donc l'extraction des boues. Le réglage de la position de chaque manchette doit assurer une évacuation des boues en fond d'ouvrage telle qu'il n'y ait pas d'accumulations et que le lit de boues ait sensiblement la même épaisseur sur toute la surface du fond de l'ouvrage.

Selon l'état de la technique, l'ajustement du niveau du bord supérieur des manchettes est obtenu à l'aide de chaînes, ou de tiges filetées ou de tiges crantées, auxquelles sont accrochées les manchettes, les chaînes ou tiges étant elles-mêmes accrochées à un support.

Le réglage des niveaux de chaque manchette requiert :
- un processus expérimental manuel itératif relativement long, de l'ordre d'une journée pour un ouvrage de diamètre égal ou supérieur à 25 m, et laborieux, visant à mesurer et à obtenir un flux massique d'extraction des boues nécessaire et suffisant pour chacun des tubes,
- des interventions et manipulations humaines sur un pont tournant, constituant généralement le bras mobile, avec des risques de chute qui doivent être limités pour des raisons de sécurité des opérateurs et des équipements.

Les débits de boues à évacuer sont variables, notamment dans le cas de boues de station d'épuration, selon les contraintes atmosphériques, notamment en cas d'orages. Mais dans d'autres conditions, le débit de boues à évacuer peut être beaucoup plus faible.

Dans la pratique, dans les clarificateurs selon l'état de la technique, l'ajustement des niveaux des manchettes est effectué pour le plus fort débit à évacuer. La fréquence d'ajustement des niveaux des manchettes est limitée, et en aucun cas le niveau des manchettes n'est ajusté en continu et/ou en temps réel aux besoins effectifs de la station.

Le niveau de liquide des boues dans la goulotte de reprise doit être obligatoirement maintenu :
- inférieur au niveau de liquide dans le clarificateur pour permettre l'extraction des boues en raison de la force motrice d'aspiration des boues due à la différence de niveaux ;
- et inférieur aux niveaux de restitution des tubes de succion, c'est-à-dire que le tube doit être obligatoirement émergent relativement au niveau de liquide dans la goulotte, pour pouvoir équilibrer les débits qui traversent chaque tube de succion afin d'obtenir une bonne distribution des flux massiques extraits entre les tubes de succion ; le débit traversant chaque tube de succion est inversement proportionnel à la viscosité du fluide véhiculé et donc de la concentration en boues.

Les différences de niveaux hydrauliques sont maintenues grâce à un pompage extérieur permanent d'évacuation des boues de la goulotte, constituant le moyen d'évacuation de ces boues.

L'extrémité supérieure des manchettes des tubes de succion devrait donc être à la fois :
- continuellement, et quel que soit le débit de fonctionnement de la station, suffisamment haute pour émerger du niveau liquide dans la goulotte,
- et la plus basse possible par rapport au niveau hydraulique supérieur dans le bassin du clarificateur pour assurer un débit maximum traversier dans les tubes de succion et permettre l'extraction des masses de boue nécessaires et suffisantes lorsque la station fonctionne à sa capacité hydraulique et/ou massique maximale.

Pour satisfaire ces deux contraintes antagonistes, le niveau de restitution des manchettes des tubes de succion étant réglé en principe une fois pour toutes, et non ajustable en continu, cela exige que le débit de pompage dans la goulotte soit en permanence le plus fort possible de sorte que le réglage des manchettes des tubes soit correct, c'est-à-dire avec émergence des manchettes, en cas de pluies et/ou débits ou charges maximales de fonctionnement de la station.

Selon ces réglages, et le fonctionnement induit de l'appareil, le débit d'extraction et de recirculation des boues est maintenu, sans régulation possible, constant et maximal, indépendamment du régime hydraulique réel de fonctionnement de la station, de la production de boues et des besoins réels d'extraction des boues.

Selon ces réglages, et le fonctionnement induit, le débit d'extraction et de recirculation des boues est, de fait, trop important en périodes de faible débit hydraulique et/ou massique de fonctionnement de la station (périodes nocturnes, périodes de temps sec, effluents moins pollués entraînant une moindre production de boues) induisant sur la file eau :
- des surconsommations d'énergie de pompage (par une pompe de recirculation),
- une usure inutile du matériel de pompage avec des conséquences sur les coûts de maintenance et la fréquence de renouvellement des équipements,
- des surcharges hydrauliques massiques sur le clarificateur pouvant aboutir à l'entraînement de matières en suspension dans l'eau traitée clarifiée, c'est-à-dire une dégradation de la qualité de l'eau traitée,
- un risque accru d'entraînement de bulles d'air et donc de désamorçage du dispositif d'évacuation des boues de la goulotte.

Selon ces réglages, et le fonctionnement induit, la concentration des boues extraite est, de fait, plus faible que nécessaire la plupart du temps, et les volumes de boues à évacuer, et à traiter, sont donc inutilement plus élevés que nécessaire en périodes de faibles débits hydrauliques et massiques de fonctionnement de la station, ce qui a pour conséquence d'induire sur la file boues :
- des surconsommations d'énergie de pompage,
- des surcharges hydrauliques de la filière boues (par suite de dégradation des conditions de fonctionnement),
- et/ou l'augmentation des durées de fonctionnement de l'atelier de traitement augmentant les consommations électriques, l'usure du matériel et les coûts de main d'oeuvre,
- des augmentations substantielles des consommations de réactifs,
- une diminution possible de la siccité des boues traitées et donc des volumes de boues traitées, ce qui induit une augmentation des coûts de manutention et d'évacuation/gestion des boues traitées.

En outre, selon l'état de la technique, malgré les précautions d'usage pour le réglage des manchettes, le risque de noyer tout ou parties de tubes de succion, lorsque le niveau dans la goulotte de reprise devient supérieur au niveau dé déversement des manchettes, n'est pas maîtrisé en cas :
- de débit hydraulique exceptionnel,
- de dysfonctionnement et/ou arrêt de la pompe d'évacuation des boues de la goulotte, pouvant engendrer l'accumulation de déchets fibreux et de filasse au niveau des dispositifs de réglage de chacune des manchettes télescopiques équipant les tubes de succion avec des risques induits pour la durée de vie des équipements et la nécessité d'opérations de nettoyage longues et risquées pour le personnel et le matériel.

La présente invention a pour but, surtout, de fournir un appareil pour la clarification d'un effluent contenant des boues, du genre défini précédemment, qui permet :
- de réduire le débit d'extraction de boues et d'améliorer la maîtrise du temps de séjour des boues en fond d'ouvrage d'un clarificateur à tubes de succion,
- de réduire ainsi les coûts d'exploitation des clarificateurs, en particulier les coûts de pompage de recirculation des boues,
- de réduire les durées de fonctionnement des équipements de pompage et donc les coûts de maintenance et de renouvellement de ces équipements.

Plus globalement, l'invention se propose de fiabiliser :
- le fonctionnement des clarificateurs à tubes de succion,
- et donc le fonctionnement des files eau et boues d'une station de traitement d'eaux résiduaires urbaines et/ou industrielles.

Dans ce contexte, l'invention se fixe en particulier pour objectifs :
- d'ajuster en temps réel le débit d'extraction des boues d'un clarificateur pour au moins un tube de succion aux besoins réels de la station,
- et de s'affranchir du risque de noyage d'au moins un tube de succion.

Pour ce faire, selon l'invention, un appareil pour la clarification d'un effluent contenant des boues, du genre défini précédemment, est caractérisé en ce que la manchette d'au moins un tube de succion est libre en coulissement vertical relativement au bras mobile supportant la goulotte, et au tube, et en ce que sur la manchette est implantée une réserve de flottabilité nécessaire et suffisante pour maintenir continuellement émergée l'extrémité de déversement de la manchette dans la goulotte de sorte que le niveau de déversement de la manchette s'ajuste automatiquement par rapport au niveau du liquide et des boues dans la goulotte.

De préférence, chaque tube de succion est équipé d'une manchette libre en coulissement vertical relativement au bras mobile et au tube, et sur chaque manchette est implantée une réserve de flottabilité nécessaire et suffisante pour maintenir continuellement émergée l'extrémité de déversement de la manchette dans la goulotte.

Chaque manchette peut être réalisée en une matière dont la densité est supérieure à celle du liquide de la goulotte et, pour assurer la réserve de flottabilité, la manchette est munie d'un dispositif flottant qui baigne dans le liquide de la goulotte et qui maintient le bord supérieur de la manchette à une distance constante au-dessus du niveau de liquide dans la goulotte. Les manchettes et les tubes de succion peuvent être réalisés en polychlorure de vinyle.

Le dispositif flottant peut être constitué d'un flotteur qui entoure la manchette correspondante. Le flotteur peut présenter une forme en anneau ou une forme torique. Chaque flotteur peut être réalisé en polystyrène expansé.

Avantageusement, le dispositif flottant est monté réglable sur la manchette de sorte que son positionnement soit ajustable en hauteur.

Les différents dispositifs flottants équipant les tubes de succion d'un même clarificateur peuvent être dimensionnés différemment, en taille et/ou densité des matériaux, de sorte que les positions des extrémités de déversement de chacune des manchettes puissent varier d'un tube à l'autre et permettre ainsi le réglage individuel de la capacité d'aspiration de chaque tube de succion.

L'appareil peut comporter un dispositif de guidage vertical du déplacement de chaque manchette, libre en coulissement vertical, par rapport au bras mobile de support.

Avantageusement, l'appareil comporte un dispositif de guidage vertical du déplacement de chaque manchette, libre en coulissement vertical, par rapport au bras mobile de support. Le dispositif de guidage peut comprend une pièce plate, semblable à une échelle, dont la partie inférieure est réalisée sous forme de pince avec deux branches qui viennent s'accrocher dans des trous diamétralement opposés prévus en extrémité haute de la manchette, le plan vertical de la pièce étant orienté à angle droit par rapport à la direction radiale du bras et de la goulotte, des plaques de guidage fixées au bras étant munies d'une fente traversée verticalement par la pièce et assurant son guidage. La fente peut être équipée d'un patin en matière à faible coefficient de frottement.

En variante, chaque manchette peut être réalisée dans un matériau avec une densité apparente inférieure à celle du liquide de la goulotte et du bassin, et être équipée d'un lest réglable, pesant sur le système de guidage, notamment une tige de guidage, pour le réglage de la position de l'extrémité supérieure de déversement de la manchette dans la goulotte.

Le dispositif flottant assurant la réserve de flottabilité est optimisé pour faciliter le libre mouvement vertical de la manchette et ne pas perturber l'écoulement horizontal des boues évacuées de la goulotte.

L'invention consiste, mises à part les dispositions exposées ci-dessus, en un certain nombre d'autres dispositions dont il sera plus explicitement question ci-après avec référence aux dessins annexés, qui ne sont nullement limitatifs. Sur ces dessins :
Fig. 1 est une coupe verticale schématique partielle d'un appareil de clarification selon l'invention, le bras mobile n'étant pas représenté.
Fig. 2 est une vue en perspective, avec parties enlevées, d'une goulotte avec quatre manchettes au-dessous d'un bras mobile d'un appareil de clarification selon l'invention.
Fig. 3 montre en élévation une manchette munie de son flotteur et d'un moyen de guidage vertical.
Fig. 4 est une vue éclatée en élévation des éléments de Fig. 3, et
Fig. 5 est une vue schématique en perspective de dessus d'une partie de la goulotte et de manchettes d'un appareil de clarification selon l'invention.

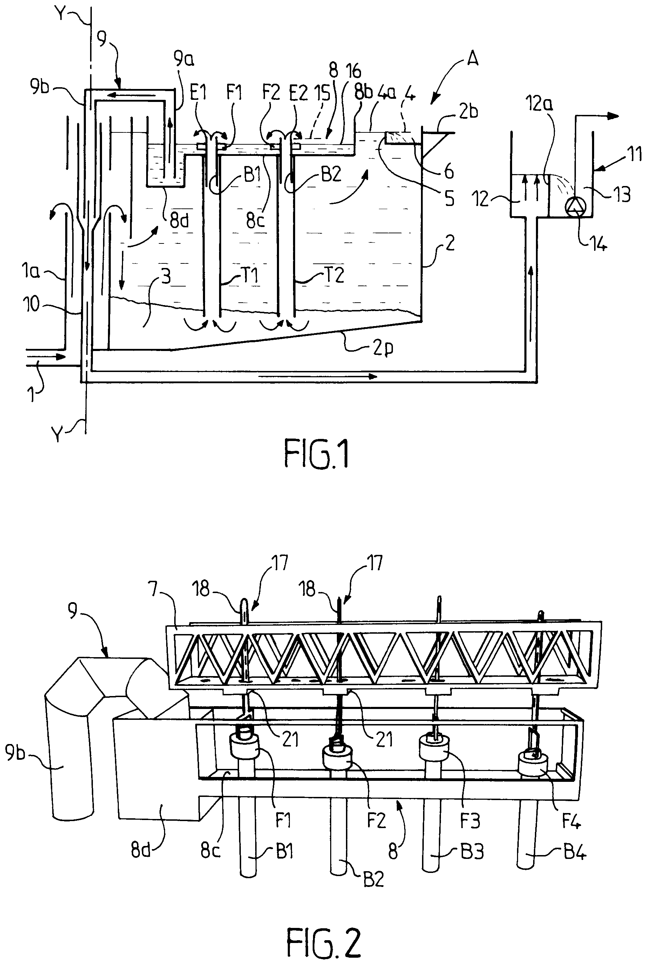

En se reportant à Fig.1 des dessins, on peut voir un appareil A pour la clarification d'un effluent 1 qui, dans l'exemple représenté, arrive par une canalisation située en partie basse de l'appareil A, lequel comporte un bassin 2 de clarification. Généralement, le bassin 2 est circulaire et son diamètre est d'au moins 20 m pour le genre de clarificateur plus spécialement concerné par l'invention. Sur Fig. 1, seule une moitié du bassin 2 est représentée, l'autre moitié étant symétrique par rapport à l'axe vertical géométrique Y-Y du bassin circulaire.

Les boues se déposent en fond de bassin pour former une couche 3, tandis que l'eau clarifiée 4 est évacuée au niveau supérieur de l'appareil par-dessus un déversoir 5 et est recueillie dans une rigole 6 pour être récupérée par un moyen non représenté. Selon l'exemple de réalisation de Fig.1, le fond 2p du bassin 2 est à pente plus ou moins prononcée ou horizontal.

L'appareil A comporte au moins un bras mobile 7 visible sur Fig.2, mais non représenté sur Fig.1. Le bras 7 s'étend radialement depuis la zone centrale du bassin 2 où il est supporté et entraîné en rotation par un moteur central ou périphérique (non représenté). L'extrémité extérieure radialement du bras 7 est supportée par une jambe d'appui, non représentée, munie en partie inférieure d'un organe de roulement reposant sur un chemin de roulement 2b solidaire de la paroi cylindrique du bassin 2, pouvant être en saillie radiale vers l'extérieur. Le bras 7 constitue un pont tournant, schématiquement représenté, qui permet de balayer toute la surface du liquide du bassin 2 par une rotation de 360°. Le bras 7 est conçu de manière à permettre à un opérateur de se déplacer en toute sécurité sur ce bras pour effectuer les réglages nécessaires de l'appareil.

Bien que les bassins de clarification soient généralement circulaires, l'invention s'applique également à des bassins rectangulaires surmontés d'un bras mobile en translation suivant une dimension du bassin, notamment la longueur.

Au moins une goulotte 8 est supportée par le bras 7, par exemple à l'aide de tirants non représentés, de manière qu'elle soit immergée sur une partie de sa hauteur dans le liquide du bassin 2. La goulotte 8 présente une section transversale sensiblement rectangulaire, ouverte en partie supérieure et fermée sur tous ses autres côtés. Sur Fig. 2, une paroi longitudinale de la goulotte est ouverte pour rendre visible l'intérieur de la goulotte. Le bord supérieur 8b de la paroi de la goulotte se trouve au-dessus du niveau supérieur 4a de l'eau clarifiée, c'est-à-dire au-dessus du niveau supérieur du liquide dans le bassin 2.

Le fond 8c de la goulotte est sensiblement horizontal depuis l'extrémité radiale extérieure jusqu'à un puits 8d prévu à l'extrémité radiale intérieure de la goulotte 8. Une branche verticale 9a d'un siphon 9 plonge dans le puits 8d, l'autre branche verticale 9b du siphon constitue un joint hydraulique mobile. Une canalisation verticale 10 est raccordée au joint hydraulique pour l'évacuation des boues prélevées dans le fond du puits 8d par le siphon 9. La hauteur motrice maximale due à la différence de niveau de liquide pour l'évacuation des boues dans la conduite 10 est égale à la différence de hauteur entre le niveau supérieur 4a de l'eau clarifiée dans le bassin et le niveau d'émergence des tubes suceurs au dessus du niveau dans la goulotte.

La conduite 10 est reliée à une fosse 11 de reprise des boues. La fosse 11 est séparée en deux compartiments 12, 13 par une cloison 12a formant déversoir. Les boues arrivent dans le compartiment 12, et la pompe 14 est située dans l'autre compartiment 13 où se déversent les boues. La pompe 14 constitue un moyen d'évacuation des boues vers un bassin d'aération non représenté. Le débit de la pompe 14 est régulé. La conduite 1 d'arrivée de l'effluent à traiter se raccorde à une partie verticale 1a cylindrique entourant la conduite 10.

Des tubes de succion T1, T2 sont maintenus relativement à la goulotte 8 au-dessous de celle-ci et plongent vers le fond du bassin 2 de telle sorte que leur extrémité inférieure pénètre dans le lit de boues 3. Les tubes T1, T2 sont disposés à distances radiales différentes de l'axe géométrique Y-Y, et sont en nombre suffisant pour assurer une évacuation satisfaisante des boues déposées. Selon l'exemple représenté sur Fig. 1, pour simplifier, seuls deux tubes T1, T2 ont été représentés, mais le nombre de tubes peut être supérieur et atteindre vingt ou plus. Les tubes T1, T2 peuvent être fixés sous le fond 8c de la goulotte, lequel fond comporte des orifices au droit des tubes T1, T2.

Chaque tube T1, T2 comporte en partie haute une manchette B1, B2 qui débouche, dans la goulotte 8 à un niveau 15 inférieur au niveau 4a du liquide dans le bassin. La différence entre le niveau de liquide 4a dans le clarificateur et le niveau 15 de déversement des boues dans la goulotte au débouché des manchettes est utilisée comme force motrice pour la succion et l'extraction des boues en fond de clarificateur 2. Les manchettes B1, B2 sont de forme tubulaire cylindrique et sont engagées à l'intérieur des tubes T1, T2.

Selon l'invention, pour au moins un tube de succion, et de préférence pour chaque tube de succion, la manchette B1, B2 est libre en coulissement vertical relativement au tube associé et au bras mobile 7. Le coulissement vertical entre la manchette B1, B2 et le tube associé T1, T2 est assuré de manière presque étanche à l'aide de joints appropriés.

Chaque manchette B1, B2 présente une réserve de flottabilité nécessaire et suffisante pour maintenir continuellement émergée l'extrémité supérieure, de déversement, E1, E2 de la manchette dans la goulotte. Le niveau de déversement de la manchette s'ajuste automatiquement par rapport au niveau 16 du liquide et des boues dans la goulotte 8.

Avantageusement, pour assurer cette réserve de flottabilité, la manchette B1, B2 est munie d'un dispositif flottant constitué par un flotteur F1, F2 qui baigne dans le liquide de la goulotte 8 et qui maintient le bord supérieur de la manchette à une distance constante au-dessus du niveau 16 de liquide dans la goulotte. Comme visible sur Fig. 2-4, les flotteurs peuvent présenter une forme d'anneau, ou une forme torique, pour entourer la manchette correspondante B1, B2.

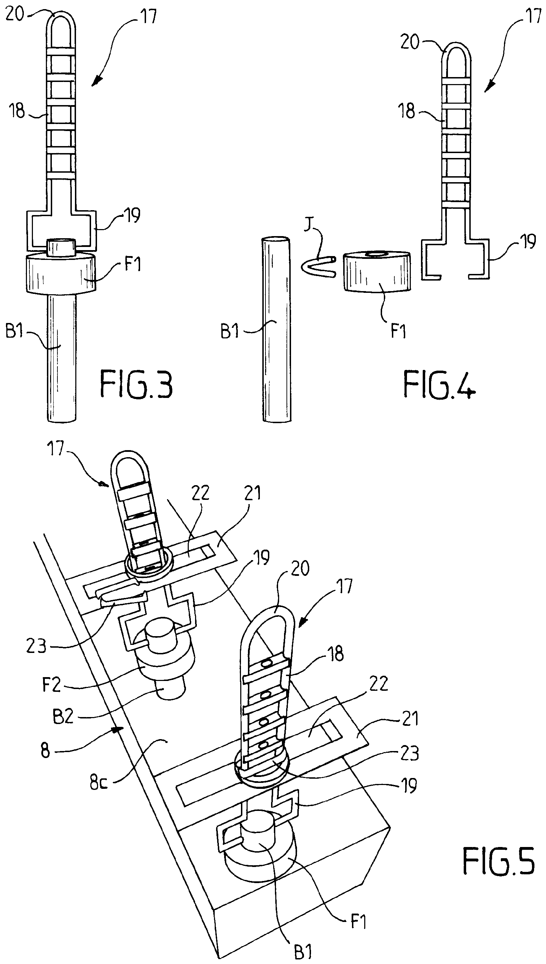

Chaque flotteur est monté sur la manchette de manière réglable suivant la direction verticale, en particulier par vissage sur ladite manchette, à l'aide d'une bague hélicoïdale ouverte de serrage J solidaire de la manchette (Fig.4), de sorte que son positionnement soit facilement ajustable en hauteur.

Les flotteurs F1, F2 peuvent être réalisés en polystyrène expansé ou autre matière de densité inférieure à celle du liquide de la goulotte 8. Avec un tel flotteur, la manchette correspondante peut être réalisée en une matière dont la densité est supérieure à celle du liquide de la goulotte. Les manchettes B1, B2 et les tubes T1, T2 sont avantageusement réalisés en PVC (polychlorure de vinyle).

En variante, chaque manchette peut être réalisée avec une densité apparente inférieure à celle du liquide de la goulotte et du bassin, auquel cas la réserve de flottabilité est présente dans la manchette elle-même. Pour le réglage de la position de l'extrémité supérieure de déversement de la manchette dans la goulotte, on prévoit alors un lest réglable agissant sur la manchette en pesant sur le système de guidage mobile, notamment une tige de guidage. Selon cette variante la densité propre de la matière de la manchette peut être soit inférieure à celle du liquide, soit supérieure auquel cas des espaces vides fermés sont prévus dans la matière pour diminuer la densité apparente.

Les différents dispositifs flottants, ou flotteurs F1, F2, équipant les tubes de succion T1, T2 d'un même clarificateur peuvent être réalisés différemment, aussi bien en taille et/ou en densité du matériau utilisé, de sorte que les extrémités de déversement E1, E2 de chacune des manchettes peuvent varier d'un tube à l'autre et permettre ainsi un réglage individuel de la capacité d'aspiration de chaque tube de succion.

Comme illustré sur Fig. 2-4, chaque manchette telle que B1 est équipée d'un dispositif de guidage vertical 17 propre à assurer le maintien de la manchette B1 suivant son axe géométrique vertical de mobilité au sein du tube de succion T1 fixe par rapport à la goulotte 8 et au bras 7.

Selon l'exemple de réalisation de Fig. 2-4, le dispositif de guidage 17 comprend une pièce 18 plate, semblable à une échelle, dont la partie inférieure est réalisée sous forme de pince 19 avec deux branches qui viennent s'accrocher dans des trous diamétralement opposés prévus en extrémité haute de la manchette B1. L'extrémité supérieure 20 de la pièce 18 est fermée sous forme de demi-cercle pour constituer une poignée facilitant la prise de la pièce 18 pour un déplacement vertical. Le plan vertical de la pièce 18 est orienté à angle droit par rapport à la direction radiale du bras 7 et de la goulotte 8. Des plaques de guidage 21 (Fig.2 et 5), fixées sous le bras 7, sont munies d'une fente 22 orthogonale à la direction radiale. Cette fente 22 est traversée verticalement par la pièce 18 et assure son guidage. La fente 22 est avantageusement équipée d'un patin 23 en matière à faible coefficient de frottement, notamment en PTFE (polytétrafluoroéthylène), permettant de limiter les risques d'abrasion et d'assurer la pérennité du dispositif. Les patins 23 peuvent être réalisés en tout matériau identifié pour ses propriétés d'aptitude glissante et de résistance mécanique.

Ceci étant, le réglage et le fonctionnement d'un appareil de clarification selon l'invention sont les suivants.

Pour un débit quelconque d'effluent à traiter arrivant par la conduite 1 et auquel correspond un niveau 16 dans la goulotte 8, et un lit 3 de boues, l'opérateur règle la position des manchettes B1, B2 par ajustement de la position des flotteurs F1, F2. Ce réglage, pour chaque manchette, est effectué de telle sorte que l'extrémité supérieure de déversement E1, E2 de la manchette se trouve à un niveau approprié, bien entendu inférieur au niveau 4a, pour assurer un débit d'évacuation satisfaisant des boues par le tube correspondant T1, T2.

Lorsque ce réglage a été effectué, une variation de hauteur du niveau 16 entraîne une variation de hauteur correspondante des extrémités supérieures E1, E2 qui demeurent ainsi à une distance constante au-dessus du niveau 16, de sorte qu'il n'y a pas d'autre réglage à effectuer lorsque le niveau dans la goulotte 8 varie.

Ainsi, selon l'invention, le niveau de déversement des tubes de succion et des manchettes dépend du niveau des boues dans la goulotte 8 et devient, par conséquent, intrinsèquement lié au débit d'évacuation des boues de la goulotte. Il en résulte que le débit d'évacuation des boues de la goulotte 8, déjà asservi et/ou pouvant être facilement asservi en temps réel aux besoins réels de la station, permet le pilotage optimisé en temps réel du débit d'extraction des boues du clarificateur et cela, sans automatisme additionnel à ceux déjà existants, ni intervention humaine.

En outre, la présente invention supprime avantageusement tout risque de noyage des tubes de succion T1, T2 et des manchettes B1, B2 dont l'extrémité de déversement, par suite de leur flottabilité, demeure au-dessus du niveau 16 de liquide dans la goulotte 8.

Au contraire, dans un clarificateur classique ne mettant pas en oeuvre l'invention, les manchettes seraient maintenues par rapport au bras 7. Lorsqu'un réglage de la position de l'extrémité supérieure a été effectué, cette position reste fixe par rapport au bras 7 et au fond de la goulotte 8. Si le niveau 16 de liquide dans la goulotte varie, la distance entre l'extrémité de déversement de la manchette et le niveau de liquide dans la goulotte varie, alors que selon l'invention cette distance reste constante et permet une autorégulation du niveau 16 de liquide dans la goulotte 8. En effet, si le niveau 16 baisse, l'extrémité de déversement de la manchette, selon l'invention, baisse également, ce qui augmente la hauteur hydraulique motrice et fait augmenter le débit des boues aspirées par le tube de succion T1, T2 pour faire remonter le niveau de liquide dans la goulotte 8. Inversement, lorsque le niveau dans la goulotte 8 monte, l'extrémité de déversement des manchettes monte également, ce qui réduit la force hydraulique motrice.

Les moyens proposés par l'invention sont :
- simples,
- robustes,
- peu coûteux à l'achat,
- adaptables très facilement à un clarificateur existant.
Ils ne nécessitent pas de modifications des ouvrages de génie civil et/ou des équipements qui impacteraient les garanties des ouvrages. Ils n'entraînent pas de coûts de maintenance additionnels. Ils ne requièrent pas, ou requièrent peu, de modifications de l'automatisme et des systèmes de régulation existant sur les stations de traitement.

## Revendications

1. Appareil pour la clarification d'un effluent contenant des boues, comportant :
- un bassin (2) de clarification par décantation des boues qui se déposent en fond de bassin, tandis que l'eau clarifiée est évacuée au niveau supérieur (4a) du bassin ;
- au moins un bras (7) mobile au-dessus du niveau supérieur du liquide du bassin pour balayer toute la surface du liquide ;
- au moins une goulotte (8) supportée par le bras, de manière à être immergée suivant une partie de sa hauteur dans le liquide du bassin ;
- des tubes de succion (T1, T2) maintenus relativement à la goulotte, plongeant vers le fond du bassin, chaque tube de succion comportant en partie haute une manchette (B1, B2) réglable verticalement débouchant dans la goulotte à un niveau (15) inférieur à celui du niveau (4a) de liquide dans le bassin, les tubes plongeurs permettant de délivrer dans la goulotte du liquide et des boues provenant du fond du bassin ,
- et un moyen d'évacuation des boues de la goulotte,
**caractérisé en ce que** la manchette (B1, B2) d'au moins un tube de succion (T1, T2) est libre en coulissement vertical relativement au bras mobile (7) supportant la goulotte, et au tube (T1, T2), et **en ce que** sur la manchette (B1, B2) est implantée une réserve de flottabilité nécessaire et suffisante pour maintenir continuellement émergée l'extrémité de déversement (E1, E2) de la manchette dans la goulotte (8) de sorte que le niveau de déversement de la manchette s'ajuste automatiquement par rapport au niveau (16) du liquide et des boues dans la goulotte.

2. Appareil selon la revendication 1, **caractérisé en ce que** chaque tube de succion (T1, T2) est équipé d'une manchette (B1, B2) libre en coulissement vertical relativement au bras mobile (7) et au tube (T1,T2) et **en ce que** sur chaque manchette est implantée une réserve de flottabilité nécessaire et suffisante pour maintenir continuellement émergée l'extrémité de déversement de la manchette (B1, B2) dans la goulotte (8).

3. Appareil selon la revendication 1 ou 2, **caractérisé en ce que** chaque manchette (B1, B2) est réalisée en une matière dont la densité est supérieure à celle du liquide de la goulotte (8), et que pour assurer la réserve de flottabilité, la manchette (B1, B2) est munie d'un dispositif flottant qui baigne dans le liquide de la goulotte et qui maintient le bord supérieur de la manchette à une distance constante au-dessus du niveau de liquide (16) dans la goulotte (8).

4. Appareil selon la revendication 3, **caractérisé en ce que** les manchettes (B1, B2) et les tubes de succion (T1, T2) sont réalisés en polychlorure de vinyle.

5. Appareil selon la revendication 3 ou 4, **caractérisé en ce que** le dispositif flottant est constitué d'un flotteur (F1, F2) qui entoure la manchette correspondante (B1, B2).

6. Appareil selon la revendication 5, **caractérisé en ce que** le flotteur (F1, F2) présente une forme en anneau ou une forme torique.

7. Appareil selon la revendication 5 ou 6, **caractérisé en ce que** chaque flotteur (F1, F2) est réalisé en polystyrène expansé.

8. Appareil selon l'une quelconque des revendications 3 à 7, **caractérisé en ce que** le dispositif flottant est monté réglable sur la manchette (B1, B2) de sorte que son positionnement soit ajustable en hauteur.

9. Appareil selon l'une quelconque des revendications 3 à 8, **caractérisé en ce que** les différents dispositifs flottants équipant les manchettes (B1, B2) d'un même clarificateur sont dimensionnés différemment, en taille et/ou densité des matériaux, de sorte que les positions des extrémités de déversement de chacune des manchettes puissent varier d'un tube à l'autre et permettre ainsi le réglage individuel de la capacité d'aspiration de chaque tube de succion.

10. Appareil selon l'une quelconque des revendications précédentes, **caractérisé en ce qu'**il comporte un dispositif de guidage vertical (17) du déplacement de chaque manchette (B1, B2), libre en coulissement vertical, par rapport au bras mobile (7) de support.

11. Appareil selon la revendication 1 ou 2, **caractérisé en ce que** chaque manchette est réalisée en une matière dont la densité apparente est inférieure à celle du liquide de la goulotte et du bassin, et est équipée d'un lest réglable pesant sur la tige de guidage pour le réglage de la position de l'extrémité supérieure de déversement de la manchette dans la goulotte.

12. Appareil selon l'une quelconque des revendications précédentes, **caractérisé en ce qu'**il comporte un dispositif de guidage vertical (17) du déplacement de chaque manchette (B1, B2), libre en coulissement vertical, par rapport au bras mobile (7) de support.

13. Appareil selon la revendication 12, **caractérisé en ce que** le dispositif de guidage (17) comprend une pièce (18) plate, semblable à une échelle, dont la partie inférieure est réalisée sous forme de pince (19) avec deux branches qui viennent s'accrocher dans des trous diamétralement opposés prévus en extrémité haute de la manchette (B1), le plan vertical de la pièce (18) étant orienté à angle droit par rapport à la direction radiale du bras (7) et de la goulotte (8), des plaques de guidage (21) fixées au bras (7) étant munies d'une fente (22) traversée verticalement par la pièce (18) et assurant son guidage.

14. Appareil selon la revendication 13, **caractérisé en ce que** la fente (22) est équipée d'un patin (23) en matière à faible coefficient de frottement.

## Patentansprüche

1. Vorrichtung zur Reinigung von schlammhaltigem Abwasser, umfassend:
- ein Dekantierklärbecken (2), in dem sich die Schlämme auf dem Grund des Beckens absetzen, während das geklärte Wasser in den oberen Bereich (4a) des Beckens abgeführt wird;
- wenigstens einen über dem oberen Bereich der Flüssigkeit des Beckens mobilen Arm (7) zum Überstreichen der gesamten Oberfläche der Flüssigkeit;
- wenigstens eine Rinne (8), die von dem Arm derart gehalten wird, dass ein Teil ihrer Höhe in die Flüssigkeit des Beckens eintaucht;
- Saugrohre (T1, T2), die relativ zur Rinne gehalten werden, die in Richtung des Grundes des Beckens eingetaucht sind, wobei jedes Saugrohr im oberen Teil eine vertikal verstellbare Manschette (B1, B2) umfasst, welche in die Rinne in einen niedrigeren Bereich (15) mündet als der Bereich (4a) der Flüssigkeit im Becken, wobei die Tauchrohre die Abgabe von Flüssigkeit und Schlamm vom Grund des Beckens in die Rinne erlauben,
- und ein Mittel zum Abführen der Schlämme aus der Rinne,
**dadurch gekennzeichnet, dass**
die Manschette (B1, B2) von mindestens einem Saugrohr (T1, T2) frei vertikal gegenüber dem mobilen Arm (7), der die Rinne trägt, und gegenüber dem Rohr (T1, T2) verschiebbar ist, und dass auf der Manschette (B1, B2) eine für das ständige Herausragen des Auslaufendes (E1, E2) der Manschette in der Rinne (8) notwendige und ausreichende Auftriebsreserve angeordnet ist, so dass die Ausgießhöhe der Manschette automatisch an die Höhe (16) der Flüssigkeit und der Schlämme in der Rinne angepasst wird.

2. Vorrichtung gemäß Anspruch 1,
**dadurch gekennzeichnet, dass**
jedes Saugrohr (T1, T2) mit einer Manschette (B1, B2) ausgestattet ist, die frei vertikal gegenüber dem mobilen Arm (7) und dem Rohr (T1, T2) verschiebbar ist, und dass auf jeder Manschette eine für das ständige Herausragen des Auslaufendes der Manschette (B1, B2) in der Rinne (8) notwendige und ausreichende Auftriebsreserve angeordnet ist.

3. Vorrichtung gemäß Anspruch 1 oder 2, **dadurch gekennzeichnet, dass** jede Manschette (B1, B2) aus einem Material besteht, dessen Dichte größer ist als jene der Flüssigkeit in der Rinne (8), und dass zur Aufrechterhaltung der Auftriebsreserve, die Manschette (B1, B2) mit einer Auftriebseinrichtung versehen ist, die sich in der Flüssigkeit der Rinne befindet und den oberen Rand der Manschette in einem konstanten Abstand über dem Flüssigkeitsstand (16) in der Rinne (8) hält.

4. Vorrichtung gemäß Anspruch 3,
**dadurch gekennzeichnet, dass**
die Manschetten (B1, B2) und die Saugrohre (T1, T2) aus Polyvinylchlorid bestehen.

5. Vorrichtung gemäß Anspruch 3 oder 4,
**dadurch gekennzeichnet, dass**
die Auftriebseinrichtung aus einem Schwimmkörper (F1, F2) besteht, der die entsprechende Manschette (B1, B2) umgibt.

6. Vorrichtung gemäß Anspruch 5,
**dadurch gekennzeichnet, dass**
der Schwimmkörper (F1, F2) eine Ringform oder eine torische Form aufweist.

7. Vorrichtung gemäß Anspruch 5 oder 6,
**dadurch gekennzeichnet, dass**
jeder Schwimmkörper (F1, F2) aus expandiertem Polystyrol besteht.

8. Vorrichtung gemäß einem oder mehreren der Ansprüche 3 bis 7,
**dadurch gekennzeichnet, dass**
die Auftriebseinrichtung derart verstellbar auf der Manschette (B1, B2) angeordnet ist, dass ihre Positionierung höhenverstellbar ist.

9. Vorrichtung gemäß einem oder mehreren der Ansprüche 3 bis 8,
**dadurch gekennzeichnet, dass**
die verschiedenen Auftriebseinrichtungen, mit denen die Manschetten (B1, B2) desselben Klärbeckens ausgestattet sind, unterschiedlich bezüglich der Größe und/oder der Dichte der Materialien dimensioniert sind, so dass die Positionen der Auslaufenden jeder einzelnen Manschette von Rohr zu Rohr unterschiedlich sein können und auf diese Weise die individuelle Einstellung der Saugkapazität jedes Saugrohrs ermöglicht wird.

10. Vorrichtung gemäß einem oder mehreren der vorherigen Ansprüche,
**dadurch gekennzeichnet, dass**
sie eine Vertikalführung (17) für die Verschiebung jeder frei vertikal gegenüber dem mobilen Tragarm (7) verschiebbaren Manschette (B1, B2) umfasst.

11. Vorrichtung gemäß Anspruch 1 oder 2,
**dadurch gekennzeichnet, dass**
jede Manschette aus einem Material besteht, dessen Schüttdichte geringer ist als jene der Flüssigkeit in der Rinne und im Becken, und dass sie mit einem verstellbaren Ballast ausgestattet ist, der zur Einstellung des oberen Auslaufendes der Manschette in der Rinne auf der Führungsstange lastet.

12. Vorrichtung gemäß einem oder mehreren der vorherigen Ansprüche,
**dadurch gekennzeichnet, dass**
sie eine Vertikalführung (17) für die Verschiebung jeder frei vertikal gegenüber dem mobilen Tragarm (7) verschiebbaren Manschette (B1, B2) umfasst.

13. Vorrichtung gemäß Anspruch 12,
**dadurch gekennzeichnet, dass**
die Führung (17) ein leiterartiges, flaches Werkstück (18) umfasst, dessen unterer Teil in Form einer Zange (19) mit zwei Armen ausgebildet ist, die in einander diametral gegenüberliegende, am oberen Ende der Manschette (B1) vorgesehene Löcher einrasten, wobei die vertikale Ebene des Werkstücks (18) in einem rechten Winkel gegenüber der radialen Richtung des Arms (7) und der Rinne (8) ausgerichtet ist, wobei am Arm (7) befestigte Führungsplatten (21) mit einem Schlitz (22) versehen sind, der vertikal von dem Werkstück (18) durchquert wird und zu dessen Führung dient.

14. Vorrichtung gemäß Anspruch 13,
**dadurch gekennzeichnet, dass**
der Schlitz (22) mit einem Gleitschuh (23) aus Material mit niedrigem Reibungskoeffizient ausgestattet ist.

## Claims

1. An apparatus for clarifying a sludge-containing effluent, comprising:
- a clarification basin (2) for clarification by settling of sludge that is deposited on the bottom of the basin while clarified water is evacuated at the upper level (4a) of the basin;
- at least one arm (7) able to move above the upper level of the liquid in the basin to sweep all the surface of the liquid;
- at least one trough (8) supported by the arm, so that it is immersed over part of its height in the liquid in the basin;
- suction tubes (T1, T2) held relative to the trough, extending downwardly toward the bottom of the basin, each suction tube including at the top a vertically adjustable sleeve (B1, B2) opening into the trough at a level (15) lower than the level (4a) of the liquid in the basin, the downwardly extending tubes enabling delivery into the trough of liquid and sludge coming from the bottom of the basin, and
- means for evacuation of sludge from the trough,
**characterized in that** the sleeve (B1, B2) of at least one suction tube (T1, T2) is free to slide vertically relative to the mobile arm (7) supporting the trough and to the tube (T1, T2) and **in that** the sleeve (B1, B2) has a reserve of buoyancy necessary and sufficient for keeping the overspill end (E1, E2) of the sleeve in the trough (8) continuously out of the water so that the overspill level of the sleeve adapts automatically relative to the level (16) of the liquid and sludge in the trough.

2. The apparatus as claimed in claim 1, **characterized in that** each suction tube (T1, T2) is equipped with a sleeve (B1, B2) free to slide vertically relative to the mobile arm (7) and to the tube (T1, T2) and **in that** each sleeve has a reserve of buoyancy necessary and sufficient for keeping the overspill end of the sleeve (B1, B2) in the trough (8) continuously out of the water.

3. The apparatus as claimed in claim 1 or 2, **characterized in that** each sleeve (B1, B2) is made from a material the density of which is higher than that of the liquid in the trough (8) and that to provide the reserve of buoyancy the sleeve (B1, B2) includes a floating device that is immersed in the liquid in the trough and that holds the upper edge of the sleeve at a constant distance above the liquid level (16) in the trough (8).

4. The apparatus as claimed in claim 3, **characterized in that** the sleeves (B1, B2) and the suction tubes (T1, T2) are made of polyvinyl chloride.

5. The apparatus as claimed in claim 3 or 4, **characterized in that** the floating device consists of a float (F1, F2) that surrounds the corresponding sleeve (B1, B2).

6. The apparatus as claimed in claim 5, **characterized in that** the float (F1, F2) has the shape of a ring or a torus.

7. The apparatus as claimed in claim 5 or 6, **characterized in that** each float (F1, F2) is made of expanded polystyrene.

8. The apparatus as claimed in any one of claims 3 to 7, **characterized in that** the floating device is adjustably mounted on the sleeve (B1, B2) so that its position is adjustable in the heightwise direction.

9. The apparatus as claimed in any one of claims 3 to 8, **characterized in that** the various floating devices equipping the sleeves (B1, B2) of the same clarifier differ in terms of size and/or the density of the materials so that the positions of the overspill ends of each of the sleeves can vary from one tube to another and thus enable individual adjustment of the aspiration capacity of each suction tube.

10. The apparatus as claimed in any one of the preceding claims, **characterized in that** it includes a vertical guide device (17) for the movement of each sleeve (B1, B2) free to slide vertically relative to the mobile support arm (7).

11. The apparatus as claimed in claim 1 or 2, **characterized in that** each sleeve is made from a material the apparent density of which is less than that of the liquid in the trough and the basin and is equipped with an adjustable ballast weighing on the guide rod for the adjustment of the position of the upper overspill end of the sleeve in the trough.

12. The apparatus as claimed in any one of the preceding claims, **characterized in that** it includes a vertical guide device (17) for the movement of each sleeve (B1, B2) free to slide vertically relative to the mobile support arm (7).

13. The apparatus as claimed in claim 12, **characterized in that** the guide device (17) includes a flat part (18) similar to a ladder the lower portion (19) of which is forceps-shaped with two branches that engage in diametrically opposite holes at the upper end of the sleeve (B1), the vertical plane of the part (18) being oriented at a right angle to the radial direction of the arm (7) and the trough (8), guide plates (21) fixed to the arm (7) including a slot (22) through which the part (18) passes vertically and which guides it.

14. The apparatus as claimed in claim 13, **characterized in that** the slot (22) is equipped with a shoe (23) made from a material having a low coefficient of friction.
